# EUROPÄISCHE PATENTSCHRIFT

(11) **EP 2 554 863 B1**
(45) Veröffentlichungstag und Bekanntmachung des Hinweises auf die Patenterteilung: **02.09.2020**
(21) Anmeldenummer: 12176794.1
(22) Anmeldetag: 18.07.2012
(51) Int. Cl.: F16C 33/50, F16C 33/46

(54) **LAGERKÄFIGSEGMENT, LAGERKÄFIG UND VERFAHREN ZUR HERSTELLUNG DESSELBEN**
BEARING CAGE SEGMENT, BEARING CAGE AND METHOD FOR MANUFACTURING THE SAME
SEGMENT DE CAGE DE ROULEMENT, CAGE DE ROULEMENT ET SON PROCÉDÉ DE FABRICATION

(30) Priorität: 01.08.2011 DE 102011080167
(43) Veröffentlichungstag der Anmeldung: 06.02.2013
(73) Patentinhaber: Aktiebolaget SKF, 415 50 Göteborg (SE)
(72) Erfinder: Beck, Burkard, 97294 Unterpleichfeld (DE); Beyfuss, Berthold, 97535 Kaisten (DE); Friedrich, Hans-Jürgen, 97486 Königsberg-Römershofen (DE); Radina, Alfred, 97711 Poppenlauer (DE); Schierling, Jonas, 97437 Hassfurt (DE); Schneider, Werner, 97488 Stadtlauringen (DE); Wagner, Gerhard, 97357 Prichsenstadt (DE); Weiglein, Jürgen, 97714 Oerlenbach (DE)
(74) Vertreter: Schonecke, Mitja

(56) Entgegenhaltungen:
- WO-A1-2011/031931
- WO-A2-2012/110601
- DE-A1- 19 736 374
- DE-A1-102007 002 359
- DE-A1-102007 049 119
- DE-C1- 3 627 153
- DE-U- 6 945 329
- JP-A- 2011 132 983
- US-A- 2 946 633
- US-A1- 2006 115 193

## Beschreibung

Die vorliegende Erfindung betrifft einen aus Lagerkäfigsegmenten und Trägerringen gebildeten Lagerkäfig und ein Verfahren zur Herstellung eines solchen Lagerkäfigs.

Lagerkäfige für Wälzlager bestehen im Allgemeinen aus zwei in einem axialen Abstand angeordneten Seitenringen und mehreren, diese Seitenringe verbindenden und in einer Umfangsrichtung des Lagerkäfigs hintereinander angeordneten Stegen, welche paarweise Taschen zur Aufnahme von Wälzkörpern bilden. Ein Lagerkäfig hält die Wälzkörper mittels der dafür vorgesehenen Taschen auf Abstand zueinander und verhindert eine unmittelbare Berührung benachbarter Wälzkörper, was Reibung und damit Wärmeentwicklung im Lager typischerweise verringert. Er sorgt außerdem für eine gleichmäßige Verteilung der Wälzkörper über einen gesamten Umfang des Käfigs bzw. Wälzlagers und ermöglicht so eine gleichmäßige Lastverteilung sowie einen ruhigen und gleichmäßigen Lauf.

Wälzlagerkäfige werden im Betrieb durch Reibungs-, Zerr- und Trägheitskräfte mechanisch stark beansprucht. Dazu können unter Umständen auch chemische Einwirkungen durch bestimmte Zusätze und Substanzen kommen. Formgebung und Werkstoffwahl sind deshalb für eine Funktionstüchtigkeit des Käfigs ebenso wie für eine Betriebszuverlässigkeit des Lagers, insgesamt von entscheidender Bedeutung.

Typsicherweise umfassen Wälzlagerkäfige gepresste Käfige und Massivkäfige. Gepresste Käfige für Wälzlager werden meist aus Stahlblech, in einigen Fällen auch aus Messingblech gefertigt. Massivkäfige für Wälzlager können beispielsweise aus Messing, Stahl, Aluminium, Polymeren oder Phenolharz hergestellt sein.

Kunststoffmassivkäfige, die oftmals mittels Spritzgussverfahren gefertigt werden, zeichnen sich durch eine günstige Kombination von Festigkeit und Elastizität aus. Gute Gleiteigenschaften von Kunststoff auf geschmierten Stahlflächen und eine geringe Rauheit der Käfigoberflächen an Berührungsstellen mit Wälzkörpern haben eine niedrige Käfigreibung, eine entsprechend geringe Wärmeentwicklung im Lager und einen kaum messbaren Verschleiß zur Folge. Wegen der geringen Werkstoffdichte bleiben auch Kräfte aus der Massenträgheit des Käfigs klein. Dank sehr guter Notlaufeigenschaften von Kunststoffkäfigen bleibt ein Lager selbst bei völligem Versagen der Schmierung noch für einige Zeit funktionsfähig, ohne dass es zum Blockieren des Lagers oder zu weiteren Folgeschäden kommt.

Bei Kunststoffen für herkömmlich gespritzte Wälzlagerkäfige kann es sich beispielsweise um Polyamid 66, Polyamid 46, Polyetheretherketon (PEEK), Phenolharz oder auch einen anderen Polymerwerkstoff handeln.

Bei reinen Kunststoffkäfigen besteht allerdings allgemein das Problem, dass diese für mittlere bis große Lagerdurchmesser, beispielsweise ab einem Durchmesser von ca. 300 mm, fertigungstechnisch nur schwer bzw. nicht in geforderter Qualität herstellbar sind. Dies liegt u.a. an dem Wärmeausdehnungskoeffizienten von Kunststoff, der gegenüber dem von Stahl wesentlich größer ist, so dass es bei Wärmeentwicklung zu einer Klemmwirkung der Wälzkörper in einem Kunststoffkäfig kommen kann. Durch den erhöhten Wärmeausdehnungskoeffizienten kann eine Schulterführung eines Kunststoffkäfigs nicht sichergestellt werden. Des Weiteren wird durch den erhöhten Wärmeausdehnungskoeffizienten auch eine Maßhaltigkeit in Relation zu dem Lagerkäfigdurchmesser verschlechtert. Auch die Festigkeit von Kunststoff ist in radialer Richtung gegenüber Metall deutlich eingeschränkt. Um Kunststoffkäfige mit derartig großen Durchmessern herzustellen, wären zudem komplizierte Spritzgusswerkzeuge nötig, was wiederum zu nicht akzeptabel hohen Herstellungskosten führen würde.

Die Druckschrift JP 2011 132 983 A offenbart ein Bereitstellen eines Käfigs, der auch in Umgebungen mit wechselnden Temperaturen stabil eingesetzt werden kann und kostengünstig hergestellt werden kann. Dieser Käfig enthält eine Vielzahl von Käfigsegmenten, die jeweils mindestens eine Tasche zum Aufbewahren von Nadelrollen und Metallringen aufweisen, um die Vielzahl von Käfigsegmenten so anzuordnen, dass sie kontinuierlich kreisförmig angeordnet sind. Der Käfig begrenzt die Bewegungen der Metallringe relativ zu den Käfigsegmenten in der Innendurchmesserrichtung und der Außendurchmesserrichtung an den Kontaktteilen der Käfigsegmente und der Metallringe.

Die Druckschrift US 2006/0115193 A1 offenbart ein Verfahren und eine Vorrichtung zum Halten von Lagerkugeln in einer Lageranordnung. Beispielsweise kann eine Käfiganordnung einen ringförmigen Käfig mit einer Vielzahl von Taschen umfassen, in die Lagerkugeln über Öffnungen mit einer Breite, die kleiner als der Durchmesser der Lagerkugeln ist, eingerastet werden können. Ein Haltering für den Käfig kann einen Innendurchmesser haben, der gleich dem Innendurchmesser des Käfigs ist. Die Käfiganordnung kann mehrere Käfigstege umfassen, wobei sich jeder Käfigsteg zwischen zwei benachbarten Taschen befindet und jeder Käfigsteg sich verjüngen kann (entweder radial, axial oder sowohl radial als auch axial). Die Vielzahl von Käfigstegen kann sich verjüngen, so dass sich die Käfigstege zu einem distalen Ende jedes Käfigstegs und von einem proximalen Ende jedes Käfigstegs weg verjüngen. Ein äußerer Steg kann die Lageranordnung führen.

Ferner offenbart die Druckschrift WO 2011 031 931 A Eine leichtgewichtige Lagerkäfiganordnung, die aus einer Vielzahl von aufschnappbaren Brückenelementen besteht, die zwischen ersten und zweiten Käfigtragringen gekoppelt sind und mit den Oberflächen benachbarter Wälzkörper übereinstimmen. Die aufschnappbaren Brückenelemente halten das Wälzelement getrennt, halten das Wälzelement in der Lageranordnung und wirken als Schmiermittelreservoir zwischen den Wälzelementen für fettgeschmierte Lager. Jedes aufschnappbare Brückenelement kann einzeln entfernt und durch Einschnappen in den ersten und zweiten Käfigstützring ersetzt werden. Optionale Verriegelungsklammern oder -ringe, die über jedem Einrastende der Brückenelemente angebracht sind, bieten optional zusätzliche Sicherheit gegen ein versehentliches Abkoppeln der Brückenelemente von den ersten und zweiten Käfigringen.

Demzufolge ist es eine Aufgabe der vorliegenden Erfindung, für mittlere bis große Lagerdurchmesser ab ca. 300 mm, Lagerkäfige mit einer für kleinere Kunststoffkäfige typischen und günstigen Kombination aus Festigkeit, Elastizität und Gleitverhalten bereitzustellen.

Erfindungsgemäß wird ein Lagerkäfig für ein Wälzlager mit den Merkmalen des Anspruchs 1 sowie ein Verfahren zum Herstellen eines Lagerkäfigs mit den Merkmalen des Anspruchs 7 bereitgestellt.

Es ist eine Erkenntnis der in den unabhängigen Ansprüche 1 und 7 definierten Erfindung, dass die vorliegende Aufgabe durch einen kombinierten Lagerkäfig gelöst werden kann, der eine Kombination von Lagerkäfigsegmenten und wenigstens einem Trägerring aufweist, entlang dessen Umfang, d. h. in Umfangsrichtung, die Käfigsegmente platziert werden. Dabei handelt es sich vorzugsweise um Kunststofflagerkäfigsegmente und um Trägerringe aus Metall und/oder Carbon. Für eine verliersichere Anordnung der Lagerkäfigsegmente auf einem Trägerring ist dieser als Lamellenring ausgebildet, auf den die einzelnen Lagerkäfigsegmente quasi aufgefädelt werden können. Gemäß der vorliegenden Erfindung können also mehrere Lagerkäfigsegmente über wenigstens einen als Lamellenring ausgebildeten Trägerring zu einem Ringkorpus zusammengefasst werden.

Unter einem Lamellenring soll im Nachfolgenden ein elastisch federnder spiralförmiger Lamellenring verstanden werden, der aus zwei nebeneinander anliegenden und axial oder radial vorgespannten Ringhälften gebildet ist. Unter einem doppelt gewundenen Lamellenring sind also zwei mit ihren Stirnseiten unter axialer oder radialer Vorspannung aneinander liegende Ringhälften zu verstehen, welche aus einem Bandabschnitt hergestellt sind.

Ein Lagerkäfigsegment des Lagerkäfigs weist zwei in einer Umfangsrichtung verlaufende Umfangsstege und wenigstens einen die Umfangsstege verbindenden Verbindungssteg auf. Das Lagerkäfigsegment weist eine Kopplungsanordnung auf, die ausgebildet ist, um das Lagerkäfigsegment verliersicher auf wenigstens einem als Lamellenring ausgebildeten Trägerring anzuordnen, sodass mittels zweier in der Umfangsrichtung benachbart auf dem Trägerring angeordneter Lagerkäfigsegmente wenigstens eine Tasche zur Aufnahme eines Wälzkörpers gebildet werden kann.

Gemäß bevorzugten Ausführungsbeispielen kann das Lagerkäfigsegment aus einem Kunststoff, wie beispielsweise Polyamid 66, Polyamid 46, Polyetheretherketon (PEEK), Phenolharz oder auch einen anderem Polymerwerkstoff, gebildet sein.

Manche Ausführungsbeispiele von Lagerkäfigsegmenten können genau einen die Umfangsstege verbindenden Verbindungssteg aufweisen, so dass mittels zweier in der Umfangsrichtung benachbart auf dem Trägerring angeordneter Lagerkäfigsegmente auch nur genau eine Tasche zur Aufnahme eines Wälzkörpers gebildet wird. Andere Ausführungsbeispiele von Lagerkäfigsegmenten können auch zwei die beiden axial gegenüberliegenden Umfangsstege verbindende Verbindungsstege aufweisen, sodass bereits durch die jeweils zwei Verbindungs- und Umfangsstege eines Lagerkäfigsegments eine Wälzkörpertasche gebildet wird. In diesem Fall werden mittels zweier in der Umfangsrichtung benachbart auf dem Trägerring angeordneter Lagerkäfigsegmente zwei Wälzkörpertaschen gebildet.

Gemäß Ausführungsbeispielen kann die Kopplungsanordnung eine an wenigstens einen der Umfangsstege an- oder eingeformte Aufnahme zum formschlüssigen Aufnehmen des wenigstens einen als Lamellenring ausgebildeten Trägerrings umfassen. Dabei kann das Lagerkäfigsegment derart gestaltet sein, dass ein die zwei Umfangsstege verbindender Verbindungssteg in axialer Richtung verläuft, um die zwei Umfangsstege in einem vordefinierten axialen Abstand voneinander zu halten. Obwohl grundsätzlich auch Ausführungsformen vorstellbar sind, bei denen lediglich ein Lamellenring zum Tragen der Lagerkäfigsegmente ausreicht, weist bei bevorzugten Ausführungsbeispielen die Kopplungsanordnung in jedem der zwei axial beabstandeten Umfangsstege angeformte Aufnahmen zum formschlüssigen Aufnehmen jeweils eines als Lamellenring ausgebildeten Trägerrings auf. Bei einem derartigen Ausführungsbeispiel kann ein Lagerkäfigsegment also mittels der an die Umfangsstege angeformten Aufnahmen mit zwei axial beabstandeten Lamellenringen formschlüssig und verliersicher gekoppelt werden.

Die Kopplungsanordnung kann demnach derart ausgebildet sein, dass die an den Umfangsstegen des Lagerkäfigsegments jeweils ausgebildeten Aufnahmen als in Umfangsrichtung weisende Öffnungen bzw. Durchführungen für jeweils einen als Lamellenring ausgebildeten Trägerring ausgeführt sind. Diese an den Umfangsstegen angebrachten Durchführungen können beispielsweise so gestaltet sein, dass sie in ihrem Querschnitt derart auf einen Querschnitt eines zu haltenden Lamellenrings abgestimmt sind, sodass ein Lagerkäfigsegment mit einem relativ belastbaren Klemmsitz auf den wenigstens einen als Lamellenring ausgebildeten Trägerring aufgeklemmt werden kann. Dazu können Abmessungen des Querschnitts einer (elastischen) Durchführung gemäß Ausführungsbeispielen 97% bis 99% der Abmessungen eines Querschnitts eines zu haltenden Lamellenrings betragen. Dabei ist unter einer "elastischen" Durchführung beispielsweise eine Kunststoffdurchführung zu verstehen, deren Öffnungsmaße sich beim Einbringen des Lamellenrings an dessen Abmessungen anpassen, so dass ein ausreichend fester Sitz des Lamellenrings in der Durchführung gewährleistet ist. Gemäß anderen Ausführungsbeispielen können Abmessungen des Querschnitts der Durchführung aber auch 100% oder mehr der Abmessungen eines Querschnitts des zu haltenden Lamellenrings betragen, so dass ein besonderes leichtgängiges Einfädeln des Rings in die Durchführung möglich ist.

Die Aufnahmen oder Durchführungen für den wenigstens einen als Lamellenring ausgebildeten Trägerring können gemäß einer Ausführungsform in einer einem zweiten Umfangssteg zugewandten Seite eines ersten Umfangsstegs eingeformt sein. Mit anderen Worten ausgedrückt bedeutet dies, dass die an den Umfangsstegen eingeformten Trägerringdurchführungen auf axial einander zugewandten Seiten der gegenüberliegenden Umfangsstege liegen, so dass ein Trägerring nicht auf einer Stirnseite eines so gebildeten Lagerkäfigs liegt, sondern vielmehr näher an einem Außen- oder Innenringmantel. Dadurch kann der Lagerring näher an den Wälzkörpern, beispielsweise Rollen, sitzen und wird somit formstabiler. Es werden somit häufig weniger Kippmomente erzeugt. Des Weiteren kann in axialer Richtung Platz eingespart werden, was wiederum zu insgesamt schlankeren Lagern führen kann. Andere Ausführungsformen erlauben aber selbstverständlich auch, dass die Aufnahmen für den wenigstens einen als Lamellenring ausgebildeten Trägerring an einer einem zweiten Umfangssteg abgewandten Seite eines ersten Umfangsstegs angeformt sind. Mit anderen Worten ausgedrückt bedeutet dies, dass die an den Umfangsstegen ein- bzw. angeformten Trägerringdurchführungen auf axial einander abgewandten Seiten der gegenüberliegenden Umfangsstege liegen, so dass ein Trägerring auf einer Stirnseite eines so gebildeten Lagerkäfigs liegt.

Bevorzugt umfasst ein erfindungsgemäßer Lagerkäfig einen ersten und einen zweiten als Lamellenring ausgebildeten Trägerring, sowie mehrere oben erwähnter Lagerkäfigsegmente, die mittels der beschriebenen Kopplungsanordnung über die beiden Lamellenträgerringe zu einem Ringkorpus zusammengefasst sind.

Der wenigstens eine als Lamellenring ausgebildete Trägerring (Lamellenträgerring) kann vorteilhaft aus Metall oder Carbon (Kohlenstofffaserverbund) gebildet sein, sodass nach einer Montage des Lagerkäfigs ein kombinierter Metall-Kunststoff- bzw. Carbon-Kunststoff-Lagerkäfig entsteht.

Gemäß manchen Ausführungsbeispielen kann ein Lamellenring nach einer Montage der Lagerkäfigsegmente versiegelt werden, um die Lagerkäfigsegmente besonders verliersicher zu halten. Eine derartige Versiegelung könnte beispielsweise durch Verschweißen, Verlöten, o.ä., der nebeneinanderliegenden Ringhälften erreicht werden. Dabei könnte es sich beispielsweise um ein punktweises Verschweißen oder Verlöten (z.B. an den Stößen) handeln, sodass die gegeneinander vorgespannten Ringhälften nicht auseinander gedehnt werden können.

Weitere bevorzugte Ausführungsbeispiele und Weiterbildungen der vorliegenden Erfindung sind Gegenstand der abhängigen Ansprüche und der nachfolgenden detaillierten Beschreibung.

Mittels einer durch die Lagerkäfigsegmente und der Lamellenträgerringe aus Metall oder Carbon erzielte Segmentbauweise kann ein Wärmeausdehnungskoeffizient bei kombinierten Metall- bzw. Carbon-Kunststoff-Lagerkäfigen auf ein Minimum reduziert werden, was sich insbesondere bei mittleren bis großen Lagerdurchmessern ab ca. 300 mm positiv bemerkbar macht. Gegenüber reinen Kunststoffkäfigen kann durch den Einsatz der Lamellenträgerringe, bei denen es sich beispielsweise um Lamellenringe aus Stahl handeln kann, eine Erhöhung der Festigkeit, insbesondere in radialer Richtung, erreicht werden. Durch die als Träger fungierenden Lamellenringe ist ein erzielbarer Ringdurchmesser nach oben im Wesentlichen unbeschränkt.

Des Weiteren können Kunststofflagerkäfigsegmente derart mit metallischen Lamellenträgerringen gekoppelt werden, dass es in montiertem Zustand des kombinierten Lagerkäfigs zu keinem metallischen Kontakt zwischen Wälzkörper und metallischen Lamellenträgerringen kommt, wodurch ein Verschleiß durch Käfigkontakt deutlich reduziert werden kann. Auch die oben bereits beschriebenen Notlaufeigenschaften des kombinierten Metall- bzw. Carbon-Kunststoff-Lagerkäfigs können durch den Einsatz von Kunststofflagerkäfigsegmenten auf vorteilhafte Weise gegenüber reinen Metallkäfigen verbessert werden.

Infolge der Elastizität von Kunststofflagerkäfigsegmenten können Wälzkörper in die durch benachbarte Segmente gebildeten Taschen einschnappen, wodurch eine Haltefunktion für die Wälzkörper realisiert wird. Ein erfindungsgemäßer kombinierter Lagerkäfig kann somit völlig getrennt von dem Lager montiert werden.

Weitere Vorteile von Ausführungsbeispielen der vorliegenden Erfindung können sich durch eine zum Teil enorme Gewichtsersparnis gegenüber herkömmlichen Messing- bzw. Stahlmassivkäfigen ergeben. Diese Gewichtsersparnis wird in erster Linie durch den Einsatz erfindungsgemäßer Kunststofflagerkäfigsegmente erzielt. Dadurch dass nicht ein ganzer Käfig, sondern lediglich einzelne Kunststoffkäfigsegmente hergestellt werden müssen, ist dies mit einfachen und kleinen Spritzgusswerkzeugen möglich, was wiederum eine kostengünstige Fertigung eines kombinierten Lagerkäfigs ermöglicht. Unter anderem sind ein niedriges Laufgeräusch durch gute Dämpfung, hervorragende tripologische Eigenschaft und eine ausgezeichnete Notlaufeigenschaft weitere Vorteile dieses Lagerkäfigs.

Lagerkäfige mit einer Mehrzahl von Kunststoffkäfigsegmenten, die als solche über wenigstens einen Lamellenträgerring zu einem Ringkorpus zusammengefasst sind, können prinzipiell für sämtliche Wälzlagerformen und -varianten eingesetzt werden. Ein derartiger Lagerkäfig kann außenring-, innenring- und auch laufbahngeführt konstruiert werden.

Lagerkäfige der vorgestellten Art können zum Beispiel auch bei Anwendungen eingesetzt werden, in denen Messingmaterial nicht eingesetzt werden darf, wie zum Beispiel in so genannten Sauergas-Anwendungen ("Sour Gas"-Anwendungen) oder Ammoniak-tauglichen Kompressoren (Ammonia Compressors). Bei den vorgestellten Lagerkäfigen sind hinsichtlich der Lamellenträgerringe und Wälzkörper Standardkomponenten verwendbar.

Ausführungsbeispiele der vorliegenden Erfindung werden nachfolgend bezugnehmend auf die beiliegenden Zeichnungen näher erläutert. Es zeigen:
- Fig. 1: eine perspektivische Darstellung eines nicht fertig montierten Lagerkäfigs mit einer Mehrzahl von separaten Käfigsegmenten, welche auf zwei Lamellenträgerringe aufgebracht werden können, gemäß einem Ausführungsbeispiel;
- Fig. 2: eine Darstellung zur Veranschaulichung eines Montagevorgangs einzelner Käfigsegmente auf einen oder zwei Lamellenträgerringe, gemäß einem Ausführungsbeispiel; und
- Fig. 3: eine perspektivische Darstellung eines fertig montierten Lagerkäfigs mit einer Mehrzahl von separaten Käfigsegmenten, welche auf zwei Lamellenträgerringe aufgebracht sind, gemäß einem Ausführungsbeispiel;

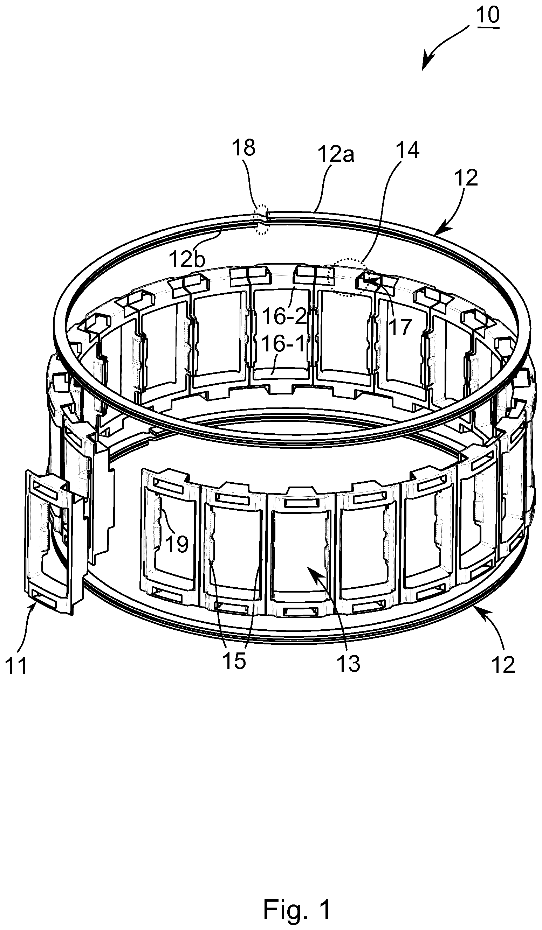

Fig. 1 zeigt eine perspektivische und lediglich exemplarische Darstellung eines noch nicht fertig montierten Lagerkäfigs 10 mit einer Mehrzahl von separaten Käfigsegmenten 11, welche auf zwei axial beabstandete Lamellenträgerringe 12 aufgebracht werden können.

Die Mehrzahl der Lagerkäfigsegmente 11 dient zur Aufnahme von nicht gezeigten Wälzkörpern in durch die Lagerkäfigsegmente 11 gebildete Wälzkörpertaschen 13. Dazu umfasst ein Lagerkäfigsegment 11 wenigstens zwei in einer Umfangsrichtung verlaufende und axial beabstandete Umfangsstege 16-1, 16-2. Ferner ist bei einem Lagerkäfigsegment 11 wenigstens ein die Umfangsstege 16-1, 16-2 verbindender Verbindungssteg 15 vorgesehen, so dass mittels zweier in der Umfangsrichtung benachbart auf einem Lamellenträgerring 12 angeordneter Lagerkäfigsegmente 11 wenigstens eine Tasche 13 oder ein Fenster zur Aufnahme eines Wälzkörpers gebildet werden kann. Obwohl zu diesem Zweck pro Lagerkäfigsegment 11 auch nur genau ein Verbindungssteg 15 ausreichen würde, welcher in auf dem Lamellenträgerring 12 montiertem Zustand in axialer Richtung, d. h. in Richtung der Lagerrotationsachse, verläuft, zeigt die Fig. 1 eine Ausführungsform mit zwei in Umfangsrichtung beabstandeten, axial verlaufenden und die gegenüberliegenden Umfangsstege 16-1, 16-2 verbindenden Stegen 15.

Ein die beiden axial gegenüberliegenden Umfangsstege 16-1, 16-2 verbindender Steg 15 verläuft in axialer Richtung, um die beiden Umfangsstege 16-1, 16-2 in einem vordefinierten axialen Abstand, der beispielsweise von einer Rollenlänge abhängt, zueinander zu halten. Bei dem in Fig. 1 gezeigten Ausführungsbeispiel wird eine Wälzkörpertasche 13 durch die beiden Umfangsstege 16-1, 16-2 und die beiden in Umfangsrichtung gegenüberliegenden Verbindungsstege 15 eines Käfigsegments 11 gebildet und begrenzt. Im Falle nur eines Verbindungsstegs pro Lagerkäfigsegment 11 würde eine Wälzkörpertasche 13 hingegen durch zwei benachbart auf einem Lamellenträgerring 12 angeordnete Lagerkäfigsegmente 11 gebildet, wobei die Tasche 13 bzw. das Fenster durch die Umfangs- und Verbindungsstege der in Umfangsrichtung benachbarten Lagerkäfigsegmente 11 begrenzt würde. Bei Ausführungsbeispielen bilden die Umfangsstege 16-1, 16-2 in montiertem Zustand des Lagerkäfigs 10 stirnseitig zu den Wälzkörpern angeordnete Führungsborde.

Gemäß einer bevorzugten Ausführungsform kann ein Lagerkäfigsegment 11 komplett einstückig aus Kunststoff gefertigt sein, beispielsweise mittels eines Spritzgussverfahrens. Bei dem Kunststoff kann es sich, wie es eingangs bereits erwähnt wurde, beispielsweise um Polyamid 66, Polyamid 46, Polyetheretherketon (PEEK), Phenolharz oder auch einen anderen Polymerwerkstoff handeln.

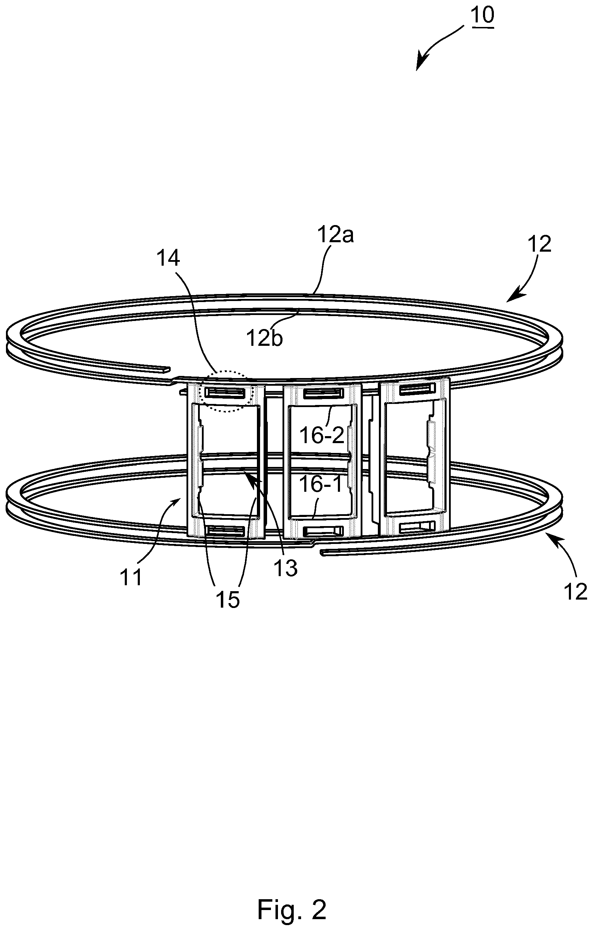

Jedes der Lagerkäfigsegmente 11 weist eine Kopplungsanordnung 14 auf, die ausgebildet ist, um das Lagerkäfigsegment 11 auf wenigstens einem als Lamellenring ausgebildeten Trägerring 12 (Lamellenträgerring) anzuordnen. In dem dargestellten Ausführungsbeispiel weist der Lagerkäfig 10 zwei als Lamellenringe ausgebildete Trägerringe 12 auf, die jeweils stirnseitig mit den einzelnen Lagerkäfigsegmenten 11 gekoppelt werden können. In der Fig. 1 sind elastisch federnde spiralförmige Lamellenringe 12 gezeigt, die jeweils aus zwei nebeneinander anliegenden Ringhälften 12a und 12b gebildet sind. Um eine plane Ausbildung eines doppelt gewickelten Lamellenrings 12 zu gewährleisten, weist dieser in einem Abschnitt eine Knickung 18 auf. Die beiden Enden der Ringhälften 12a und 12b schließen vor dieser Knickung 18 ab, d. h. die Stöße sind versetzt angeordnet. Ein Ringende eines doppelt gefalteten spiralförmigen Lamellenringes 12 kann nun unter leichter axialer oder auch radialer Spreizung in die Kopplungsanordnung 14 eines Lagerkäfigsegments 11 eingesetzt und einspiralt werden, wie es im Nachfolgenden noch detaillierter anhand der Fig. 2 beschrieben wird.

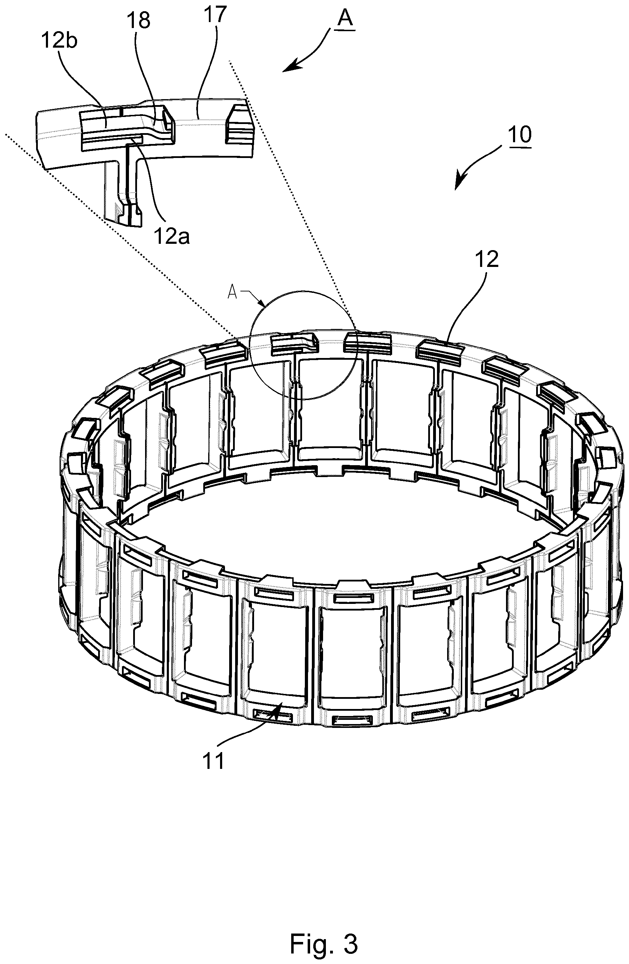

Die jeweils als Lamellenring ausgebildeten Trägerringe 12 können vorteilhaft aus Metall oder Carbon gebildet sein, sodass nach einer Montage des Lagerkäfigs 10 (siehe Fig. 3) ein kombinierter Metall-Kunststoff- bzw. Carbon-Kunststoff-Lagerkäfig entsteht.

Die Kopplungsanordnung 14 eines Lagerkäfigsegments 11 umfasst gemäß Ausführungsbeispielen eine an wenigstens einen der Umfangsstege 16-1, 16-2 angeformte (elastische) Aufnahme zum formschlüssigen Aufnehmen des wenigstens einen Lamellenträgerrings 12. Infolge einer gewissen Elastizität der Aufnahme, beispielsweise einer bei Spritzguss-Kunststoff üblichen Elastizität, kann der Lamellenträgerring 12 formschlüssig durchgeführt werden und somit Lamellenträgerring 12 und Lagerkäfigsegment 11 miteinander verbinden. Gemäß dem in Fig. 1 gezeigten Ausführungsbeispiel kann dazu ein Umfangssteg 16-1, 16-2 wenigstens eine axial außenliegende und in Umfangsrichtung weisende Durchführung 17 zum Aufnehmen oder Durchführen eines Lamellenträgerrings 12 aufweisen. Dabei meint "in Umfangsrichtung weisend", dass die Durchführung 17 eine in Umfangsrichtung weisende Flächennormale hat.

Die elastische Aufnahme weist somit gemäß einem Ausführungsbeispiel eine in einem gewissen Maße elastische an dem Kunststoff des Lagerkäfigsegments 11 an- bzw. eingeformte Öffnung oder Durchführung 17 auf, welche einen an den Lamellenträgerring 12 angepassten Öffnungsquerschnitt aufweist, um eine belastbare Klemmverbindung zwischen Ring 12 und Lagerkäfigsegment 11 zu ermöglichen. Die Öffnungsfläche der elastischen Durchführung 17 kann dazu gemäß Ausführungsbeispielen zwischen 97% und 99% der Querschnittsfläche der beiden axial aneinander liegenden Ringhälften 12a, 12b des Lamellenrings 12 betragen. Gemäß anderen, z. B. weniger elastischen Ausführungsbeispielen kann die Öffnungsfläche der Durchführung 17 aber auch 100% oder mehr der Querschnittsfläche der beiden axial bzw. radial aneinander liegenden Ringhälften 12a, 12b des Lamellenrings 12 betragen, so dass auch bei einer weniger elastischen Durchführung 17 ein besonderes leichtgängiges Einfädeln des Rings in die Durchführung 17 möglich ist.

Gemäß Fig. 1 sind an einem Umfangssteg 16-1, 16-2 jeweils derartige axial außen liegende und in Umfangsrichtung weisende Durchführungen 17 vorgesehen, die ausgebildet sind, um einen Lamellenträgerring 12 aufzunehmen bzw. zu umgreifen. Durch das vollumfängliche, formschlüssige Umgreifen des Lamellenträgerrings 12 vermittels der entsprechenden Durchführungen 17 kann eine besonders stabile, beanspruchbare und verliersichere Kopplung von Kunststofflagerkäfigsegment 11 und Lamellenträgerring 12 erreicht werden.

Die Durchführungen 17 für den wenigstens einen Lamellenträgerring 12 können, wie in Fig. 1 gezeigt, an einer dem axial gegenüberliegenden Umfangssteg 16-2 abgewandten Seite des Umfangsstegs 16-1 angeformt sein, so dass die an den gegenüberliegenden Umfangsstegen 16-1, 16-2 angeformten Durchführungen 17 auf axial einander abgewandten Seiten der axial gegenüberliegenden Umfangsstege 16-1, 16-2 liegen. Ein Lamellenträgerring 12 aus Carbon oder Metall wird somit auf einer Stirnseite des so gebildeten Lagerkäfigs 10 gehalten.

Gemäß anderen (nicht dargestellten) Ausführungsbeispielen können die Durchführungen 17 für den wenigstens einen Lamellenträgerring 12 auch an einer dem axial gegenüberliegenden Umfangssteg 16-2 zugewandten Seite des Umfangsstegs 16-1 angeformt sein, so dass die an den Umfangsstegen 16 angeformten Durchführungen 17 auf axial einander zugewandten Seiten der gegenüberliegenden Umfangsstege 16 liegen. Der Lamellenträgerring 12 aus Carbon oder Metall wird dann gerade nicht auf einer Stirnseite des so gebildeten Lagerkäfigs 10 gehalten, sondern vielmehr innerhalb einer durch den Abstand der axial gegenüberliegenden Umfangsstegabschnitte definierten axialen Erstreckung des so gebildeten Lagerkäfigs. Dadurch kann ein Lagerring näher an den Wälzkörpern, beispielsweise Rollen, stützen und wird somit formstabiler und erzeugt weniger Kippmoment. Dadurch, dass dann axial innenliegende Durchführungen 17 axial nicht auftragen, kann in axialer Richtung Platz eingespart werden, was wiederum zu insgesamt schlankeren Lagern führen kann. Dies ist insbesondere vorteilhaft bei einem axial begrenzten Bauraum.

Wie es weiter aus Fig. 1 zu erkennen ist, kann ein Verbindungssteg 15, der gleichzeitig als ein Trennsteg zwischen zwei benachbarten Wälzkörpertaschen bzw. - fenstern 13 wirkt, auch ein- bzw. angeformte Führungsabschnitte 19 aufweisen, die zur Führung von Wälzkörpern, wie beispielsweise Zylinderrollen, Tonnen oder Kegeln, dienen. Gemäß dem in Fig. 1 gezeigten Ausführungsbeispiel handelt es sich bei den Wälzkörperführungsabschnitten 19 um an den Verbindungssteg 15 angeformte Führungsnasen oder -lippen, die in ihrer Form an eine Wölbung einer Wälzkörpermantelfläche angepasst sind. Generell können die in Umfangsrichtung weisenden Seiten des Verbindungsstegs 15 in ihrer Form an eine Wälzkörpergeometrie angepasst sein, d.h. also beispielsweise eine Wölbung entsprechend einer Wälzkörperoberfläche aufweisen. Dies ermöglicht in montiertem Zustand eine verbesserte und stabilere Führung der Wälzkörper. Durch diese angeformten Führungsnasen oder -lippen ist es z.B. bei einem Zylinderrollenlager möglich, den Rollensatz verliersicher im Käfig zu platzieren, wodurch eine separate Montage der einzelnen Lagerteile möglich ist ohne zusätzliche Montagehilfen.

Nachdem Ausführungsbeispiele der vorliegenden Erfindung auch einen kombinierten Lagerkäfig für ein ringförmiges Wälzlager umfassen, der eine Mehrzahl von auf wenigstens einem Lamellenträgerring 12 angeordneten Lagerkäfigsegmenten 11 aufweist, soll im Nachfolgenden auch ein Verfahren bzw. eine Vorgehensweise zum Herstellen bzw. Montieren eines derartigen Lagerkäfigs 10 erläutert werden.

Dazu ist in Fig. 2 angedeutet, dass die Montage eines erfindungsgemäßen Lagerkäfigs zunächst ein Bereitstellen wenigstens eines als Lamellenring ausgebildeten Trägerrings 12 umfasst, wobei, wie hier gezeigt, auch zwei oder mehr Lamellenträgerringe 12 für beide axiale Enden des Lagerkäfigs vorgesehen werden können. Ferner bedarf es einer Bereitstellung einer Mehrzahl von Lagerkäfigsegmenten 11 mit jeweils zwei axial beabstandeten und in einer Umfangsrichtung verlaufenden Umfangsstegen 16-1, 16-2 und wenigstens einem die Umfangsstege 16-1, 16-2 verbindenden Verbindungssteg 15, wobei jedes der Lagerkäfigsegmente 11 eine Kopplungsanordnung 14 aufweist, die ausgebildet ist, um das Lagerkäfigsegment 11 auf dem wenigstens einen Trägerring 12 anzuordnen, sodass mittels zweier in der Umfangsrichtung benachbart auf dem Trägerring 12 angeordneter Lagerkäfigsegmente 11 wenigstens eine Tasche 13 zur Aufnahme eines Wälzkörpers gebildet wird.

Zum Aufschieben der Lagerkäfigsegmente 11 auf den wenigstens einen Lamellenträgerring 12 weist eine Kopplungsanordnung 14 eines Lagerkäfigsegments 11 an den Umfangsstegen 16-1, 16-2 jeweils in Umfangsrichtung weisende Durchführungen 17 auf, durch welche bei der Montage die einzelnen Windungen 12a, 12b eines Lamellenrings 12 geführt werden können. Dazu werden, wie in Fig. 2 dargestellt, die Ringhälften 12a, 12b eines Lamellenrings 12 axial auseinander gedehnt, sodass ein Ende einer Ringhälfte 12a, 12b durch die Durchführungen 17 eines Lagerkäfigsegment geführt bzw. "gefädelt" werden kann - ähnlich wie bei Schlüsseln, die auf einem Schlüsselring gefädelt werden. Bei anderen Ausführungen eines Lamellenrings können dessen Ringhälften auch radial auseinander gedehnt werden.

Bei der Montage kann ein Lamellenring 12 entweder über bereits radial vorpositionierte und fixierte Käfigsegmente 11 "eingeschraubt" werden. Alternativ dazu können die Käfigsegmente 11 auch separat auf einen Lamellenring 12 gefädelt werden, sodass am Ende des Montageprozesses in jedem Fall ein demgemäß hergestellter bzw. montierter Metall- bzw. Carbon-Kunststoff-Lagerring entsteht, wie er perspektivisch in der Fig. 3 gezeigt ist.

Nach der Montage der Lagerkäfigsegmente 11 kann der Lamellenring 12 gemäß manchen Ausführungsbeispielen versiegelt werden, um die aufgefädelten Lagerkäfigsegmente 11 besonders verliersicher zu halten. Eine derartige Versiegelung könnte beispielsweise durch Verschweißen, Verlöten, o.ä., der nebeneinanderliegenden Ringhälften 12a, 12b erreicht werden. Dazu könnten die Ringhälften 12a, 12b beispielsweise punktweise verschweißt oder verlötet werden (z.B. an den Stößen), sodass die Ringhälften 12a, 12b danach nicht mehr ohne weiteres auseinander gedehnt werden können.

Das erfindungsgemäße Lagerkäfigkonzept lässt sich besonders bevorzugt für Lager bzw. Lagerkäfige mit einem Durchmesser ab 300 mm einsetzen, da Kunststoffmassivkäfige, wie es eingangs bereits beschrieben wurde, in dieser Größenordnung nur relativ schwer realisierbar sind. Somit umfassen Ausführungsbeispiele kombinierte Metall- bzw. Carbon-Kunststofflagerkäfige mit einem Durchmesser von 300 mm und darüber, insbesondere von 350 mm und darüber.

Bei Ausführungsbeispielen der vorliegenden Erfindung wird wenigstens ein als Lamellenring ausgebildeter Trägerring (Lamellenträgerring), bevorzugt aber zwei Lamellenträgerringe, durch Einfädeln der Lamellenträgerringe durch entsprechende Durchführungen formschlüssig an (vorpositionierten) Kunststoffsegmenten gehalten, bzw. umgekehrt. Dadurch werden die einzelnen Kunststofflagerkäfigsegmente zueinander formstabil. Die Trägerringe können dabei metallische Lamellenringe, wie z. B. Stahllamellenringe, oder Carbon-Lamellenring sein. Sollte es zu einem "Aufweichen" der Metall- bzw. Carbon-Kunststoff-Kopplungsstellen kommen, kann ein erfindungsgemäßer kombinierter Metall- bzw. Carbon-Kunststoff-Lagerkäfig trotzdem nicht auseinanderfallen. Durch das vorgeschlagene Konzept wird es möglich, laufbahn- oder schultergeführte Metall- bzw. Carbon-KunststoffLagerkäfige bereitzustellen.

### Bezugszeichenliste

- 10: Lagerkäfig
- 11: Lagerkäfigsegment
- 12: als Lamellenring ausgebildeter Trägerring (Lamellenträgerring)
- 12a: erste Lamellenträgerringhälfte
- 12b: zweite Lamellenträgerringhälfte
- 13: Wälzkörpertasche
- 14: Kopplungsanordnung
- 15: Verbindungssteg
- 16: Umfangssteg
- 17: Durchführung
- 18: Knick, Knickung
- 19: Führungssteg für Wälzkörper

## Patentansprüche

1. Ein Lagerkäfig (10) für ein Wälzlager, mit folgenden Merkmalen:
einer Mehrzahl von separaten Lagerkäfigsegmenten (11) zur Aufnahme von Wälzkörpern in durch die Lagerkäfigsegmente (11) gebildete Wälzkörpertaschen (13), wobei jedes der Lagerkäfigsegmente (11) eine Kopplungsanordnung (14) aufweist, die ausgebildet ist, um das Lagerkäfigsegment (11) auf wenigstens einem als Lamellenring ausgebildeten Trägerring (12) anzuordnen; und
wenigstens einem als Lamellenring ausgebildeten Trägerring (12), um die separaten Lagerkäfigsegmente (11) mittels ihrer Kopplungsanordnung (14) derart auf den wenigstens einen Trägerring aufbringen zu können, so dass mittels zweier in der Umfangsrichtung benachbart auf dem Trägerring (12) angeordneter Lagerkäfigsegmente (11) wenigstens eine Wälzkörpertasche (13) gebildet werden kann,
wobei der als Lamellenring ausgebildete Trägerring (12) aus einem gewickelten Band als ein wenigstens doppelt gewundener spiralförmiger Ring mit zwei nebeneinander anliegenden und axial oder radial vorgespannten Ringhälften gebildet ist, so dass ein Ringende des Lamellenrings unter axialer oder radialer Spreizung der Ringhälften (12a; 12b) in die Kopplungsanordnung (14) eines Lagerkäfigsegments (11) eingeführt werden kann.

2. Der Lagerkäfig (10) nach Anspruch 1, wobei der Lagerkäfig (10) zwei an gegenüberliegenden axialen Enden eines Lagerkäfigsegments (11) anordenbare und als Lamellenringe ausgebildete Trägerringe (12) aufweist.

3. Der Lagerkäfig (10) nach einem der vorhergehenden Ansprüche, wobei Stöße des wenigstens einen als Lamellenring ausgebildeten Trägerrings (12) um einen axialen oder radialen Knick (18) in dem Lamellenring (12) in Umfangsrichtung gegeneinander versetzt angeordnet sind.

4. Der Lagerkäfig (10) nach einem der vorhergehenden Ansprüche, wobei die Kopplungsanordnungen (14) der Lagerkäfigsegmente (11) an gegenüberliegenden axialen Enden des Lagerkäfigsegments (11) Durchführungen (17) zum Durchführen des wenigstens einen als Lamellenring ausgebildeten Trägerrings (12) aufweisen.

5. Der Lagerkäfig (10) nach Anspruch 4, wobei ein Öffnungsquerschnitt der Durchführungen (17) im Wesentlichen einem Querschnitt von zwei axial oder radial nebeneinanderliegenden Ringhälften (12a; 12b) des wenigstens einen als Lamellenring ausgebildeten Trägerrings (12) entspricht.

6. Der Lagerkäfig (10) nach einem der vorhergehenden Ansprüche, wobei die Lagerkäfigsegmente (11) aus einem Kunststoff gebildet sind und wobei der wenigstens eine als Lamellenring ausgebildete Trägerring (12) aus einem Metall oder Carbon gebildet ist.

7. Ein Verfahren zum Herstellen eines Lagerkäfigs (10) für ein Wälzlager, mit folgenden Schritten:
Bereitstellen wenigstens eines als Lamellenring ausgebildeten Trägerrings (12), der aus einem gewickelten Band als ein wenigstens doppelt gewundener spiralförmiger Ring mit zwei nebeneinander anliegenden und axial oder radial vorgespannten Ringhälften gebildet ist;
Bereitstellen einer Mehrzahl von separaten Lagerkäfigsegmenten (11) zur Aufnahme von Wälzkörpern in durch die Lagerkäfigsegmente (11) gebildete Wälzkörpertaschen (13), wobei jedes der Lagerkäfigsegmente (11) eine Kopplungsanordnung (14) aufweist, die ausgebildet ist, um das Lagerkäfigsegment (11) auf dem wenigstens einen als Lamellenring ausgebildeten Trägerring (12) anzuordnen; und
Anordnen der Mehrzahl der separaten Lagerkäfigsegmente (11) auf dem wenigstens einen als Lamellenring ausgebildeten Trägerring (12), wobei ein Ringende des Lamellenrings unter axialer oder radialer Spreizung der Ringhälften (12a; 12b) in die Kopplungsanordnung (14) eines Lagerkäfigsegments (11) eingeführt wird, so dass mittels zweier in der Umfangsrichtung benachbart auf dem Trägerring (12) angeordneter Lagerkäfigsegmente (11) wenigstens eine Tasche (13) zur Aufnahme eines Wälzkörpers gebildet wird.

## Claims

1. Bearing cage (10) for a rolling bearing, having the following features:
a plurality of separate bearing cage segments (11) for receiving rolling elements in rolling element pockets (13) formed by the bearing cage segments (11), wherein each of the bearing cage segments (11) has a coupling arrangement (14) that is configured for arranging the bearing cage segment (11) on at least one carrier ring (12) in the form of a plate ring; and
at least one carrier ring (12) in the form of a plate ring, in order for it to be possible to attach the separate bearing cage segments (11) to the at least one carrier ring by means of their coupling arrangement (14) such that, by means of two bearing cage segments (11) arranged adjacently on the carrier ring (12) in the circumferential direction, at least one rolling element pocket (13) can be formed,
wherein the carrier ring (12) in the form of a plate ring is formed from a wound band as a spiral ring with at least two windings and with two ring halves that bear adjacently against one another and are axially or radially pretensioned, such that one ring end of the plate ring can be introduced into the coupling arrangement (14) of a bearing cage segment (11) with the ring halves (12a; 12b) being spread axially or radially.

2. Bearing cage (10) according to Claim 1, wherein the bearing cage (10) has two carrier rings (12) in the form of plate rings that are able to be arranged at opposite axial ends of a bearing cage segment (11).

3. Bearing cage (10) according to either of the preceding claims, wherein joints of the at least one carrier ring (12) in the form of a plate ring are arranged in a manner offset in the circumferential direction with respect to one another by an axial or radial kink (18) in the plate ring (12).

4. Bearing cage (10) according to one of the preceding claims, wherein the coupling arrangements (14) of the bearing cage segments (11) have, at opposite axial ends of the bearing cage segment (11), leadthroughs (17) for passing through the at least one carrier ring (12) in the form of a plate ring.

5. Bearing cage (10) according to Claim 4, wherein an opening cross section of the leadthroughs (17) corresponds substantially to a cross section of two axially or radially adjacent ring halves (12a; 12b) of the at least one carrier ring (12) in the form of a plate ring.

6. Bearing cage (10) according to one of the preceding claims, wherein the bearing cage segments (11) are made of a plastic, and wherein the at least one carrier ring (12) in the form of a plate ring is made of a metal or carbon.

7. Method for producing a bearing cage (10) for a rolling bearing, having the following steps of:
providing at least one carrier ring (12) in the form of a plate ring, which is formed from a wound band as a spiral ring with at least two windings and with two ring halves that bear adjacently against one another and are axially or radially pretensioned;
providing a plurality of separate bearing cage segments (11) for receiving rolling elements in rolling element pockets (13) formed by the bearing cage segments (11), wherein each of the bearing cage segments (11) has a coupling arrangement (14) that is configured for arranging the bearing cage segment (11) on the at least one carrier ring (12) in the form of a plate ring; and
arranging the plurality of separate bearing cage segments (11) on the at least one carrier ring (12) in the form of a plate ring, wherein one ring end of the plate ring is introduced into the coupling arrangement (14) of a bearing cage segment (11) with the ring halves (12a; 12b) being spread axially or radially, such that, by means of two bearing cage segments (11) arranged adjacently in the circumferential direction on the carrier ring (12), at least one pocket (13) for receiving a rolling element is formed.

## Revendications

1. Cage de roulement (10) pour un roulement à rouleaux, présentant les particularités suivantes :
une pluralité de segments de cage de roulement (11) distincts pour recevoir des éléments roulants dans des poches d'éléments roulants (13) formées par les segments de cage de roulement (11), chacun des segments de cage de roulement (11) présentant un ensemble de couplage (14) qui est réalisé pour disposer le segment de cage de roulement (11) sur au moins une bague support (12) réalisée sous la forme d'une bague à lamelles ; et
au moins une bague support (12) réalisée sous la forme d'une bague à lamelles afin de pouvoir appliquer les segments de cage de roulement (11) distincts au moyen de leur ensemble de couplage (14) à ladite au moins une bague support de telle sorte qu'au moins une poche d'élément roulant (13) peut être formée au moyen de deux segments de cage de roulement (11) juxtaposés sur la bague support (12) dans la direction circonférentielle,
dans laquelle la bague support (12), réalisée sous la forme d'une bague à lamelles, est formée à partir d'un ruban enroulé sous la forme d'une bague en spirale à au moins deux spires avec deux moitiés de bague adjacentes et axialement ou radialement précontraintes de sorte qu'une extrémité de bague de la bague à lamelles peut être introduite dans l'ensemble de couplage (14) d'un segment de cage de roulement (11) par un écartement axial ou radial des moitiés de bague (12a ; 12b).

2. Cage de roulement (10) selon la revendication 1, dans laquelle la cage de roulement (10) présente deux bagues supports (12) pouvant être disposées aux extrémités axiales opposées d'un segment de cage de roulement (11) et réalisées sous la forme de bagues à lamelles.

3. Cage de roulement (10) selon l'une quelconque des revendications précédentes, dans laquelle les bords de ladite au moins une bague support (12) réalisée sous la forme d'une bague à lamelles sont disposés de manière décalée les uns par rapport aux autres dans la direction circonférentielle autour d'un pli axial ou radial (18) dans la bague à lamelles (12).

4. Cage de roulement (10) selon l'une quelconque des revendications précédentes, dans laquelle les ensembles de couplage (14) des segments de cage de palier (11) présentent aux extrémités axiales opposées du segment de cage de palier (11) des passages (17) pour faire passer ladite au moins une bague support réalisée sous la forme d'une bague à lamelles (12).

5. Cage de roulement (10) selon la revendication 4, dans laquelle une section transversale d'ouverture des passages (17) correspond substantiellement à une section transversale de deux moitiés de bague (12a ; 12b) axialement ou radialement contigües de ladite au moins une bague support (12) réalisée sous la forme d'une bague à lamelles.

6. Cage de roulement (10) selon l'une quelconque des revendications précédentes, dans laquelle les segments de cage de roulement (11) sont formés à partir d'une matière plastique, et dans laquelle ladite au moins une bague support (12) réalisée sous la forme d'une bague à lamelles est formée à partir d'un métal ou de carbone.

7. Procédé de fabrication d'une cage de roulement (10) pour un roulement à rouleaux, comprenant les étapes suivantes consistant à :
prévoir au moins une bague support (12), réalisée sous la forme d'une bague à lamelles, qui est formée à partir d'un ruban enroulé sous la forme d'une bague en spirale à au moins deux spires, avec deux moitiés de bague juxtaposées et axialement ou radialement précontraintes ;
prévoir une pluralité de segments de cage de roulement (11) distincts pour recevoir des éléments roulants dans des poches d'éléments roulants (13) formées par les segments de cage de roulement (11), chacun des segments de cage de roulement (11) présentant un ensemble de couplage (14) qui est réalisé pour disposer le segment de cage de roulement (11) sur ladite au moins une bague support (12) réalisée sous la forme d'une bague à lamelles ; et
disposer la pluralité de segments de cage de roulement (11) sur ladite au moins une bague support (12) réalisée sous la forme d'une bague à lamelles, une extrémité de bague de la bague à lamelles étant introduite dans l'ensemble de couplage (14) d'un segment de cage de roulement (11) par un écartement axial ou radial des moitiés de bague (12a ; 12b), de sorte qu'au moins une poche (13) pour recevoir un élément roulant est formée au moyen de deux segments de cage de roulement (11) disposés de manière adjacente sur la bague support (12) dans la direction circonférentielle.
